# EUROPEAN PATENT SPECIFICATION

(11) **EP 0 989 324 B1**
(45) Date of publication and mention of the grant of the patent: **04.06.2003**
(21) Application number: 99307570.4
(22) Date of filing: 24.09.1999
(51) Int. Cl.: F16G 1/14, C08K 5/103, C08L 75/04

(54) **Power transmission belt**
Treibriemen
Courroie de transmission

(30) Priority: 25.09.1998 JP 27103198
(43) Date of publication of application: 29.03.2000
(73) Proprietor: BANDO CHEMICAL INDUSTRIES, LTD., Hyogo-ku, Kobe (JP)
(72) Inventor: Asami, Yoko, c/o Bando Chemical Ind., Kobe (JP); Nakashima, Eijiro, c/o Bando Chemical Ind., Kobe (JP); Fujiwara, Shinji, c/o Bando Chemical Ind., Kobe (JP); Onoe, Susumu, c/o Bando Chemical Ind., Kobe (JP)
(74) Representative: Cresswell, Thomas Anthony

(56) References cited:
- WO-A-92/12000
- US-A- 4 500 666
- US-A- 4 507 418
- PATENT ABSTRACTS OF JAPAN vol. 1999, no. 10, 31 August 1999 (1999-08-31) & JP 11 132292 A (MITSUBOSHI BELTING LTD), 18 May 1999 (1999-05-18) -& DATABASE WPI Section Ch, Week 199930 Derwent Publications Ltd., London, GB; Class A25, AN 1999-354197 XP002129566
- PATENT ABSTRACTS OF JAPAN vol. 017, no. 517 (M-1481), 17 September 1993 (1993-09-17) & JP 05 133440 A (BANDO CHEM IND LTD), 28 May 1993 (1993-05-28)

## Description

### Field of the Invention

This invention relates a power transmission belt with a belt body comprising a polyurethane elastomer with reduced noises not only in the initial stage of running but also through running for a long period of time.

### Prior Art

In recent years, as driving devices for large sized fabrication machines such as machine tools or molding machines, toothed power transmission belts for under high load with a belt body comprising thermosetting polyurethane elastomers of excellent strength have been used instead of conventional rubber belts. These toothed power transmission belts are excellent in strength and durability but it has been pointed out that they cause large noises during use.

Under these circumstances, various methods for decreasing the friction coefficient thereby suppressing or reducing noises (hereinafter referred to as noise reduction) have been proposed so far.

For example, Japanese Patent Laid-Open No. 133440/1993 describes a power transmission belt comprising a polyurethane elastomer blended with a higher fatty acid ester comprising a higher fatty acid of 13 or more carbon atoms and a higher alcohol of 8 or more carbon atoms. In the transmission belt comprising the polyurethane elastomer described above, although the noise during the initial stage of running is low, it results in a problem that noises are increased during running for a long period of time.

### Object of the Invention

This invention has been achieved in order to solve the foregoing problems in the conventional power transmission belts with a belt body comprising polyurethane elastomers. Thus, it is an object of the invention to provide a power transmission belt with a belt body comprising a polyurethane elastomer capable of reducing noises not only in the initial stage of running but also through running for a long period of time.

### Summary of the Invention

The invention provides a power transmission belt with a belt body comprising a polyurethane elastomer containing a fatty acid glyceride having a fatty acid of from 9 to 30 carbon atoms as a fatty acid ingredient.

### Brief Description of the Drawing

Fig. 1 is a partial longitudinal section view of a toothed power transmission belt as an embodiment according to the invention; and
Fig. 2 is a graph showing a relation between running time and noise level of a toothed power transmission belt of the invention and of a comparative example, respectively.

### Description of Preferred Embodiments

The power transmission belt with a belt body according to the invention may be manufactured by a one-shot process and, preferably, it is manufactured by a prepolymer method. That is, a polyol and a polyisocyanate are previously reacted to prepare a prepolymer having terminal isocyanate groups, and the prepolymer is then used to manufacture the power transmission belt of the invention by an injection casting method. The prepolymer of isocyanate terminated groups can be obtained by reacting an excess polyisocyanate with the polyol.

There is no particular restriction for the polyisocyanate and, for example, there can be used, preferably, diphenylmethane diisocyanate, 2,4-tolylenediisocyanate, 2,6-tolylenediisocyanate, a mixture of 2,4-and 2,6-tolylenediisocyanates, toluidine diisocyanate, xylidine diisocyanate, naphthalenediisocyanate, polymethylene polyphenyl isocyanate, isophorone diisocyanate, hexamethylene diisocyanate, dicyclohexylmethane diisocyanate, and p-phenylene diisocyanate.

Also, there is no particular restriction for the polyol and various kinds of polyester polyols and polyether polyols and lactone polyols are optionally used. There can be preferably used polyester polyol containing, for example, an aliphatic dicarboxylic acid of from 2 to 20 carbon atoms such as adipic acid, sebacic acid, suberic acid and succinic acid, and an aromatic dicarboxylic acid such as terephthalic acid and isophthalic acid as the polybasic acid ingredient, and an aliphatic glycol of from 2 to 6 carbon atoms such as ethylene glycol, propylene glycol, butylene glycol, pentane glycol, hexane glycol and a neopentyl glycol and polyalkylene glycol such as diethylene glycol, and dipropylene glycol as the polyol ingredient.

For example, adipate type polyols such as polyethylene adipate polyol, polybutylene adipate polyol and polyethylene polypropylene adipate polyols and terephthalic acid type polyester polyols are preferably used.

As the polyether polyol, polyoxyethylene polyol, polyoxypropylene polyol and polyoxytetramethylene polyol are preferably used, for example. Polycarbonate polyol, polybutadiene polyol, polypentadiene polyol and castor oil type polyols are also used in addition to the polyether polyol described above.

It is preferable that such a prepolymer comprising a polyisocyanate and a polyol has an isocyanate group content of from 1 to 20% by weight.

The transmission belt of the invention can be manufactured by a prepolymer method by blending a fatty acid glyceride and a curing agent with a urethane prepolymer, in accordance with the invention, further blending fillers, plasticizers and stabilizers optionally, and casting them with a plurality of tensile- or strain-resisting cords into a mold, curing and then removing the same from the mold.

According to the invention, a fatty acid glyceride of from 9 to 30 carbon atoms is blended in a urethane prepolymer as a fatty acid ingredient so as to suppress noises not only in the initial stage of running but also through running for a long period of time, and the blend is molded into a transmission belt by a casting method. The casting method per se is one of well-known molding methods.

The fatty acid of from 9 to 30 carbon atoms can include, for example, capric acid, undecyl acid, lauric acid, myristic acid, palmitic acid, stearic acid, behenic acid, cerotic acid, montanic acid and melissic acid. According to the invention, in particular, a fatty acid glyceride having a fatty acid of from 10 to 20 carbon atoms as a fatty acid ingredient is preferred.

According to the invention, the fatty acid glyceride may be a solid or a liquid at a normal temperature (25°C). It may be any of monoglyceride, diglyceride and triglyceride, or may be a mixture thereof, but it is, preferably, triglyceride. The triglyceride may be a single glyceride or mixed glycerides.

Accordingly, preferred fatty acid glyceride usable in the invention can include, for example, glycerin caprate (tricaprin), glycerin laurate (trilaurin), glycerin myristate (trimyristin), glycerin palmitate (tripalmitin), glycerin stearate (tristearin), glycerin oleate (triolein), glycerin linoleate (trilinolein) and glycerin stearic palmitate (palmitodistearin). However, preferred fatty acid glyceride usable in the invention is not limited to these.

As the fatty acid glyceride as mentioned above, animal or vegetable fatty oils or fats, with the latter being preferred, containing the above fatty acid glycerides as main ingredients are also usable in the invention. The vegetable fats usable include, for example, palm oil, palm kernel oil, coconut oil and cacao butter, while the animal fats usable include, for example, beef tallow, lard, horse fat, bone fat and butter fat.

On the other hand, fatty acid glycerides of which fatty acid ingredients have 9-12 carbon atoms, preferably 10-12 carbon atoms, such as caprin or laurin or a mixture of these, are also preferably used in the invention, if desired.

The fatty acid glyceride is usually blended within a range of from 3 to 20 parts by weight relative to 100 parts by weight of the polyurethane elastomer. When the blended amount of the fatty acid glyceride is less than 3 parts by weight relative to 100 parts by weight of the polyurethane elastomer, noises are large during running of the obtained transmission belt. However, when the blended amount of the fatty acid glyceride exceeds 20 parts by weight relative to 100 parts by weight of the polyurethane elastomer, the tensile strength of the obtained transmission belt is lowered undesirably. The blended amount of the fatty acid glyceride is preferably within a range of from 5 to 15 parts by weight relative to 100 parts by weight of the polyurethane elastomer.

The curing agent is also referred to as a cross-linking agent or a chain extender. In the invention, aliphatic or aromatic diols and aliphatic or aromatic diamines are preferably used as the curing agent. The aliphatic diol can include, for example, ethylene glycol, propylene glycol, tetramethylene glycol, hexamethylene glycol, neopentyl glycol, diethylene glycol and dipropylene glycol. In addition, the aromatic diol can include, for example, (p-hydroxyethoxy)benzene, hydroxyethyl terephthalate, hydroxyethyl ester of bisphenol A and bis(p-hydroxy ethoxyphenyl)sulfone.

The aliphatic diamine can include, for example, ethylene diamine, hexamethylene diamine and isophorone diamine. The aromatic diamine can include, for example, 4,4'-diaminodiphenylmethane and 3,3'-dichloro-4,4'-diaminodiphenylmethane.

The power transmission belt of the invention preferably has a plurality of tensile-resisting cords (core cords) embedded in the belt body. The cord can include, for example, steel cords, glass fiber cords, polyester fiber cords and aromatic polyamide fiber cords, but it is not limited to them.

Further, additives such as plasticizers, flame retardants, fillers, stabilizers and colorants may optionally be blended to the urethane prepolymer upon manufacture of the transmission belt. The plasticizers can include, for example, dioctyl phthalate, dibutyl phthalate, dioctyl adipate, tricresyl phosphate and chlorinated paraffin. The flame retardants can include, for example, phosphates such as tris(β-chloropropyl phosphate), trischloroethyl phosphate, and bromine compounds such as dibromneopentyl glycol and tribromneopentyl alcohol.

The fillers can include, for example, glass fibers, carbon black, calcium carbonate, talk, kaolin, zeolite, diatomaceous earth, pearlite and vermiculite. The stabilizers known so far, for example, antioxidants, UV-absorbers, photostabilizers and hydrolysis inhibitor can be blended. In addition, catalysts can optionally be blended.

As described above, a power transmission belt with a belt body having cords embedded in the belt body can be obtained by preparing a blend by blending a fatty acid glyceride and a curing agent with a urethane prepolymer, further, blending other additives as required to the blend and casting them into a mold having the cords placed therein, and curing them under heating.

Referring, for example, to a toothed power transmission belt, a cylindrical inner mold having axially extending grooves on the outer circumferential surface corresponding to the teeth of the toothed belt is preferably prepared, cords preferably subjected to adhesive treatment is wound around the outer circumferential surface of the inner mold, and it is inserted into a cylindrical outer mold. Depending upon the cord used or the structure of the belt body employed, axially extending elevations are provided with on the surface of each of the projections formed between the grooves in order to support the cord thereon so that the cord is kept away from the surface of the projections of the inner mold.

Then, the inner mold and the outer mold are preheated, and then the urethane prepolymer blend is cast and filled into a space between the inner mold and the outer mold, and the urethane prepolymer is heated to cure. After heating and curing for a predetermined time, the molded product is taken out of the molds, and is subjected optimally to secondary curing under heating, and the resultant product is cut into a predetermined lateral size to obtain a toothed belt with a belt body of the invention.

The heating temperature and the time for the urethane prepolymer are not particularly limited, and the heating temperature usually ranges from a room temperature to 200°C, preferably, from 50 to 150°C and, most preferably, from 100 to 120°C, and the heating time usually ranges from 10 to 180 minutes, preferably, from 20 to 120 minutes, although it depends on the chemical structure of the prepolymer and the curing agent to be used.

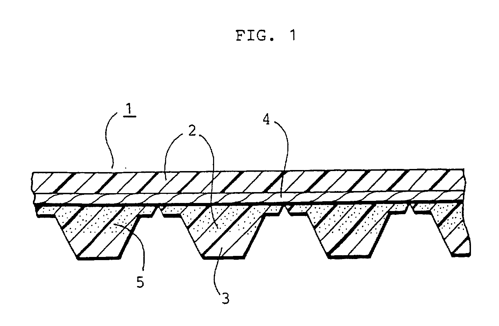

Fig. 1 is a partial longitudinal section view of a toothed power transmission belt of the invention. The belt 1 includes a belt body 2 of the polyurethane elastomer as described above and has at its inside surface teeth 3 formed of the belt body 2 and spaced apart at a constant pitch. Usually the belt body 2 has a plurality of tensile-resisting cords 4 embedded therein so that they extend in the belt body 2 along the longitudinal direction of the belt 1. If necessary, the belt body 2 contains reinforcing fibers 5 dispersed therein and has wear-resistant fabric reinforcement (not shown) at the upper surface or the inner surface or both of these bonded to the surfaces.

As set forth above, the transmission belt of the invention has a belt body formed of a polyurethane elastomer comprising a fatty acid glyceride, and noises are reduced not only in the initial stage of running but also through running for a long period of time.

The invention is to be explained by way of examples below, but the invention is not limited to those examples.

### Example 1

A cylindrical inner mold having axially extending grooves on the outer circumferential surface corresponding to the teeth of the toothed belt and axially extending elevations on the surface of each of the projections formed between the grooves was prepared. A plurality of cords comprising aromatic polyamide fibers subjected to an adhesive treatment was wound along the outer circumferential surface so that the cord was supported on the elevations, the inner mold was inserted to a cylindrical outer mold, and the inner mold and the outer mold were preheated to 80°C.

Then, 100 parts by weight of a urethane prepolymer (isocyanate content of 5.6% by weight) comprising polyoxytetramethylene glycol (average molecular weight of 1000) and 2,4-tolylenediisocyanate (liquid I) was defoamed, and heated to 80°C. Separately, a solution comprising 15 parts by weight of a curing agent (3,3'-dichloro-4,4'-diaminodiphenylmethane), 10 parts by weight of any one of the following additives A to G and 10 parts by weight of a plasticizer (di-2-ethylhexylphthalate) (liquid II) was prepared, and preheated to 120°C.

| | |
|---|---|
| Additive A | n-butyl stearate |
| Additive B | stearyl stearate |
| Additive C | ethylene glycol distearate |
| Additive D | glycerin caprylate (caprylin) |
| Additive E | glycerin caprate (caprin) |
| Additive F | glycerin palmitate (palmitin) |
| Additive G | a mixture of laurin and palmitin (1:1 weight ratio) |

The liquids I and II were supplied to a mixing head, and charged to the space between the inner mold and the outer mold while mixing and stirring, heated in an oven at 100°C for 30 minutes to crosslink and cure the prepolymer. The obtained molded product was taken out of the mold, heated at 100°C for 10 hours to cause secondary curing and cut to 20 mm width to obtain a toothed belt as shown in Fig. 1.

The thus obtained toothed belt was laid over a driving pulley and a driven pulley having 24 teeth (24T), a tension of 843 N was applied to the driven pulley, the driving pulley was driven at 40 rpm, and noises caused by running of the belt were collected by a microphone on the side of the driving pulley at a position 100 mm in the vertical direction, and the noise level was measured by a noise meter.

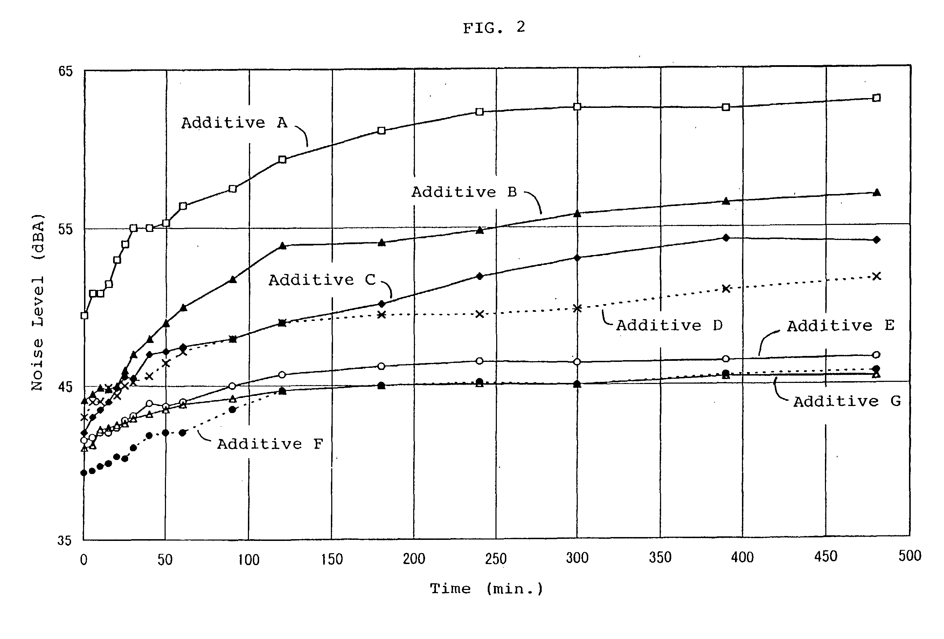

Fig. 2 shows the noise level in accordance with the running time of the belt. The noise level is a value of the noise obtained by compensating equivalent noise levels by an auditory compensation (A), and the background noise level was 16.3 dBA.

As shown in Fig. 2, the noise levels after running the belt for 8 hours, were 63.0 dBA, 57.0 dBA, 54.1 dBA and 51.7 dBA, in the case of using the additives A, B, C and D, respectively, while the noise levels were 46.7 dBA, 45.8 dBA and 45.5 dBA, in the case of using additives E, F and G, respectively. Thus, the occurrence of noises can be suppressed at a low level not only in the initial stage of running but also through running for a long period of time according to the invention.

## Claims

1. A power transmission belt having a belt body comprising a polyurethane elastomer containing a fatty acid glyceride in which the fatty acid component has from 9 to 30 carbon atoms.

2. A belt as claimed in claim 1, wherein the fatty acid glyceride is present in the belt body in an amount of from 3 to 20 parts by weight relative to 100 parts by weight of the polyurethane elastomer.

3. A belt as claimed in claim 1 or 2, wherein the fatty acid glyceride is a triglyceride.

4. A belt as claimed in any one of claims 1 to 3, wherein the fatty acid component has from 10 to 12 carbon atoms.

5. A belt as claimed in any one of claims 1 to 4, wherein the belt body has teeth formed of the belt body and spaced apart at a pitch and a plurality of tensile-resisting cords embedded in the belt body.

## Patentansprüche

1. Ein Treibriemen mit einem Riemenkörper, welcher ein Polyurethanelastomer umfasst, das ein Fettsäureglycerid enthält, in welchem die Fettsäurekomponente von 9 bis 30 Kohlenstoffatome aufweist.

2. Ein Riemen wie in Anspruch 1 beansprucht, wobei das Fettsäureglycerid in dem Riemenkörper in einer Menge von 3 bis 20 Gewichtsteilen in Bezug auf 100 Gewichtsteile des Polyurethanelastomers vorliegt.

3. Ein Riemen wie in Anspruch 1 oder 2 beansprucht, wobei das Fettsäureglycerid ein Triglycerid ist.

4. Ein Riemen wie in irgendeinem der Ansprüche 1 bis 3 beansprucht, wobei die Fettsäurekomponente von 10 bis 12 Kohlenstoffatome aufweist.

5. Ein Riemen wie in irgendeinem der Ansprüche 1 bis 4 beansprucht, wobei der Riemenkörper Zähne, die aus dem Riemenkörper gebildet werden und die mit Zwischenräumen in einem festen Abstand angeordnet sind, sowie eine Mehrzahl zugfester Schnüre, welche in den Riemenkörper eingebettet sind, aufweist.

## Revendications

1. Courroie de transmission, dont le corps est en un polyuréthane élastomère contenant un glycéride d'acide gras dont le composant acide gras comporte de 9 à 30 atomes de carbone.

2. Courroie conforme à la revendication 1, dans laquelle le glycéride d'acide gras se trouve dans le corps de courroie en une proportion de 3 à 20 parties en poids pour 100 parties en poids de polyuréthane élastomère.

3. Courroie conforme à la revendication 1 ou 2, dans laquelle le glycéride d'acide gras est un triglycéride.

4. Courroie conforme à l'une des revendications 1 à 3, dans laquelle le composant acide gras comporte de 10 à 12 atomes de carbone.

5. Courroie conforme à l'une des revendications 1 à 4, dans laquelle le corps de courroie porte des dents qui sont formées du corps de courroie et espacées d'un certain pas, et contient plusieurs câblés résistants à la traction qui sont noyés dans le corps de courroie.
